# EUROPÄISCHE PATENTANMELDUNG

(11) **EP 4 170 857 A1**
(43) Veröffentlichungstag der Anmeldung: **26.04.2023**
(21) Anmeldenummer: 22197126.0
(22) Anmeldetag: 22.09.2022
(51) Int. Cl.: H02J 7/00, H02J 7/02, H02G 3/18

(54) **LADEVORRICHTUNG FÜR EIN AKKUPACK ZUR INSTALLATION AN ODER IN EINER GEBÄUDEWAND**

(30) Priorität: 25.10.2021 DE 102021127702
(71) Anmelder: Einhell Germany AG, 94405 Landau / Isar (DE)
(72) Erfinder: MAYR, Stefan, 94405 Landau/Isar (DE)
(74) Vertreter: Hofstetter, Schurack & Partner

(57) **Zusammenfassung**

Eine Ladevorrichtung (1) für ein Akkupack (2) zur Installation an oder in einer Gebäudewand weist ein erstes Gehäuseteil (3) auf, das zur Installation an oder in der Gebäudewand ausgebildet ist und einen Hohlraum (4) bildet, der von dem ersten Gehäuseteil (3) teilweise umschlossen ist. Die Ladevorrichtung (1) weist ein Elektronikmodul (5) auf, das in dem Hohlraum (4) anordenbar oder angeordnet ist und einen Gleichrichterschaltkreis aufweist, der dazu eingerichtet ist, eine Netzspannung in eine Gleichspannung umzuwandeln. Die Ladevorrichtung (1) weist eine Kontaktanordnung (6) zur elektrischen Verbindung des Elektronikmoduls (5) mit dem Akkupack (2) auf, wobei das Elektronikmodul dazu eingerichtet ist, eine von der Gleichspannung abhängige Ladespannung zum Laden des Akkupacks (2) an der Kontaktanordnung (6) bereitzustellen ist. Die Ladevorrichtung (1) weist ein zweites Gehäuseteil (7) auf, das eine Schnittstelle (8) zur mechanischen Verbindung mit dem Akkupack (2) sowie wenigstens eine Durchführung für die Kontaktanordnung (6) auf.

## Beschreibung

Die vorliegende Erfindung betrifft eine Ladevorrichtung für ein Akkupack zur Installation an oder in einer Gebäudewand.

Viele Elektrogeräte, beispielsweise Haushaltsgeräte, Gartengeräte oder Elektrowerkzeuge, können mittels eines oder mehrerer Akkupacks, insbesondere Wechselakkupacks oder Systemakkupacks, mit elektrischer Energie versorgt werden. Zum Laden der Akkupacks werden diese von dem Elektrogerät entfernt und in einem Ladegerät geladen. Solche Ladegeräte sind als separate mobile Geräte ausgestaltet, die über ein Netzkabel zum Verbinden mit einer Steckdose verfügen.

Es ist eine Aufgabe der vorliegenden Erfindung, eine Ladevorrichtung für ein Akkupack für ein Elektrogerät anzugeben, das einen geringen Platzbedarf aufweist.

Diese Aufgabe wird durch den Gegenstand des unabhängigen Anspruchs gelöst. Vorteilhafte Weiterbildungen und bevorzugte Ausführungsformen sind Gegenstand der abhängigen Ansprüche.

Die Erfindung beruht auf dem Gedanken, eine Ladevorrichtung zur Installation in oder an einer Gebäudewand auszugestalten, indem ein erstes Gehäuseteil mit einem Hohlraum vorgesehen wird, das zur Installation in oder an der Gebäudewand ausgebildet ist und ein Elektronikmodul in dem Hohlraum aufnehmen kann, welches eine Ladespannung bereitstellen kann.

Gemäß der Erfindung wird eine Ladevorrichtung für ein Akkupack, insbesondere für ein Akkupack zur Energieversorgung eines Elektrogeräts, angegeben. Die Ladevorrichtung ist zur Installation an oder in einer Gebäudewand ausgebildet. Die Ladevorrichtung weist ein erstes Gehäuseteil auf, das zur Installation an oder in der Gebäudewand ausgebildet ist und einen Hohlraum bildet, der von dem ersten Gehäuseteil teilweise umschlossen ist. Die Ladevorrichtung weist ein Elektronikmodul auf, das in dem Hohlraum anordenbar oder angeordnet ist und einen Gleichrichterschaltkreis aufweist, der dazu eingerichtet ist, eine Netzspannung in eine Gleichspannung umzuwandeln. Die Ladevorrichtung weist eine Kontaktanordnung zur elektrischen Verbindung des Elektronikmoduls mit dem Akkupack auf, wobei das Elektronikmodul dazu eingerichtet ist, eine von der Gleichspannung abhängige Ladespannung zum Laden des Akkupacks an der Kontaktanordnung bereitzustellen. Die Ladevorrichtung weist ein zweites Gehäuseteil auf, das eine Schnittstelle zur mechanischen Verbindung der Ladevorrichtung beziehungsweise des zweiten Gehäuseteils mit dem Akkupack sowie wenigstens eine Durchführung für die Kontaktanordnung aufweist.

Das Akkupack kann lösbar, insbesondere zerstörungsfrei lösbar, mit einem Gehäuse des Elektrogeräts verbunden werden, beispielsweise über eine Rastverbindung, eine Steckverbindung und/oder eine Klemmverbindung. Insbesondere kann die mechanische Verbindung des Akkupacks mit dem Gehäuse des Elektrogeräts als formschlüssige und/oder kraftschlüssige Verbindung ausgestaltet sein, ohne dass eine stoffschlüssige Verbindung vorliegt. Mit anderen Worten kann die mechanische Verbindung des Akkupacks mit dem Gehäuse des Elektrogeräts gelöst werden, ohne dass eine stoffschlüssige Verbindung zu lösen ist. Vorzugsweise kann die mechanische Verbindung bestimmungsgemäß manuell ohne den Einsatz sonstiger Werkzeuge gelöst werden. Mit anderen Worten ist das Akkupack als Wechsel-Akkupack, insbesondere System-Akkupack ausgestaltet. Zur elektrischen und mechanischen Verbindung können die Gehäuse des Akkupacks und des Elektrogeräts jeweilige Schnittstellen aufweisen.

Eine elektrische Verbindung wenigstens einer Akkumulatorzelle des Akkupacks mit dem Elektrogerät kann beispielsweise über einen oder mehrere lösbare elektrische Kontakte, beispielsweise Klemmkontakte oder Steckkontakte, insbesondere sogenannte Tulpenkontakte oder Schwertkontakte, erfolgen. Beispielsweise können an den Schnittstellen der entsprechenden Gehäuse jeweils zueinander kompatible Stecker oder Buchsen beziehungsweise Aufnahmen oder dergleichen vorgesehen sein, um die elektrische Verbindung des Akkupacks mit dem Elektrogerät zu erzielen.

Unter einer Installation in einer Gebäudewand kann insbesondere eine Installation verstanden werden, bei der sich das erste Gehäuseteil oder der Hohlraum vollständig oder überwiegend in der Wand befindet, wenn die Ladevorrichtung bestimmungsgemäß installiert ist. Eine Installation in der Gehäusewand kann beispielsweise als Unterputzinstallation im Sinne einer Gebäudeelektroinstallation verstanden werden. Eine Installation in der Gebäudewand umfasst auch eine Installation in einer Hohlwand oder dergleichen. In solchen Ausführungsformen ist das erste Gehäuseteil zum einen dazu geeignet, zum anderen aber auch konkret dazu ausgebildet, in der Gebäudewand installiert zu werden.

Eine Installation an der Gebäudewand entspricht einer Installation der Ladevorrichtung, wobei das erste Gehäuseteil an der Oberfläche der Wand mechanisch mit dieser verbunden wird. Dementsprechend weist das erste Gehäuseteil Befestigungsmittel zum Befestigen des ersten Gehäuseteils an der Gebäudewand auf. Die Installation an der Gebäudewand kann beispielsweise als Aufputzmontage im Sinne einer Gebäudeelektroinstallation verstanden werden.

Bei der Netzspannung handelt es sich insbesondere um eine in einem elektrischen Stromversorgungsnetz bereitgestellte elektrische Wechselspannung, also beispielsweise um eine Wechselspannung mit einem Effektivwert im Bereich zwischen 100 V und 300 V, beispielsweise 110 V, 220 V oder 230 V, und einer Frequenz beispielsweise im Bereich zwischen 40 und 80 Hz, insbesondere 50 Hz oder 60 Hz.

Die Ladespannung kann identisch zur Gleichspannung sein oder kann mittels eines Steuerschaltkreises des Elektronikmoduls basierend auf der Gleichspannung erzeugt werden. Insbesondere kann der Gleichrichterschaltkreis, der beispielsweise ein Netzteil oder Teil eines Netzteils sein kann, die aus der Netzspannung umgewandelte Gleichspannung dauerhaft bereitstellen und der Steuerschaltkreis kann die Ladespannung je nach konkreten Bedingungen oder Erfordernissen an der Kontaktanordnung bereitstellen. Der Betrag der Ladespannung kann dabei gleich dem Betrag der Gleichspannung sein, es ist jedoch auch möglich, dass der Steuerschaltkreis die Ladespannung mit einem geänderten Wert bereitstellt. Insbesondere kann der Steuerschaltkreis eines oder verschiedene Ladeverfahren zum Laden des Akkupacks, beispielsweise ein CC-CV-Ladeverfahren, realisieren und/oder ein temperaturabhängiges Laden und so weiter. Das Ladeverfahren kann insbesondere auf die eingesetzte Zelltechnologie angepasst sein.

Das Elektronikmodul ist in seiner geometrischen Ausgestaltung insbesondere derart an den Hohlraum angepasst, dass der Hohlraum das Elektronikmodul vollständig oder im Wesentlichen vollständig aufnehmen kann. Das Elektronikmodul kann einen oder mehrere Schaltungsträger aufweisen, auf denen der Gleichrichterschaltkreis und gegebenenfalls der Steuerungsschaltkreis angeordnet sind.

Vorzugsweise sind der Gleichrichterschaltkreis und der Steuerungsschaltkreis auf einem einzigen Schaltungsträger angeordnet. Optional kann das Elektronikmodul ein Gehäuse aufweisen, welches den Gleichrichterschaltkreis und gegebenenfalls den Steuerungsschaltkreis beziehungsweise den einen oder die mehreren Schaltungsträger umschließt.

Die Kontaktanordnung weist einen oder mehrere elektrische Kontakte oder Leitungen auf, welche durch die wenigstens eine Durchführung durch das zweite Gehäuseteil hindurchführbar sind. Die Kontaktanordnung kann dabei fest oder lösbar mit dem zweiten Gehäuseteil verbunden sein.

Das zweite Gehäuseteil weist insbesondere eine Innenseite auf, die dem Elektronikmodul beziehungsweise dem Hohlraum zugewandt ist und eine der Innenseite gegenüberliegende Außenseite. Die Schnittstelle zur mechanischen Verbindung mit dem Akkupack ist auf der Außenseite angeordnet und die Durchführung verbindet die Außenseite mit der Innenseite. Die Innenseite ist insbesondere der Gebäudewand zugewandt, wenn die Ladevorrichtung bestimmungsgemäß installiert ist. Das zweite Gehäuseteil kann also in entsprechenden Ausführungsformen als Abdeckung des Hohlraums verstanden werden.

Das zweite Gehäuseteil kann mit dem ersten Gehäuseteil verbunden sein, insbesondere bei einer Installation der Ladevorrichtung an der Gebäudewand. Aber auch bei einer Installation in der Gebäudewand ist eine solche Verbindung möglich. Insbesondere bei einer Installation in der Gebäudewand ist es auch möglich, dass das zweite Gehäuseteil mit der Gebäudewand verbindbar ist beziehungsweise an der Gebäudewand befestigbar ist, ohne dass es direkt mit dem ersten Gehäuseteil verbunden wird.

Beispielsweise kann die Schnittstelle zur mechanischen Verbindung derart ausgestaltet sein, dass sich das Akkupack nur auf eine Weise mechanisch mit der Ladevorrichtung beziehungsweise dem zweiten Gehäuseteil verbinden lässt, die eine elektrische Kontaktierung des Akkupacks mit der Kontaktanordnung der Ladevorrichtung verursacht. Dazu kann die Schnittstelle beispielsweise zum Einschieben des Akkupacks bis zu einer Anschlagsstellung ausgebildet sein, sodass eine Kontaktierung des Akkupacks mit der Kontaktanordnung zwangsweise erreicht wird.

Durch die erfindungsgemäße Ausgestaltung einer Ladevorrichtung für ein Akkupack wird eine Installation an oder in der Gebäudewand ermöglicht, sodass eine platzsparende Aufbewahrung der Ladevorrichtung realisiert werden kann, da ansonsten ungenutzter Raum an oder in der Gebäudewand vorteilhaft ausgenutzt wird. Da im Rahmen einer Gebäudeelektroinstallation Versorgungsleitungen für die Netzspannung regelmäßig in oder an der Gebäudewand verlegt sind, ermöglicht die erfindungsgemäße Ladevorrichtung auch die Einsparung zusätzlicher Verkabelungen, beziehungsweise die Einsparung von Leitungslänge, da die Ladevorrichtung unmittelbar an oder in der Wand installierbar ist. Ferner ergibt sich auch für das Akkupack eine vorteilhafte Möglichkeit zur platzsparenden Aufbewahrung, indem das Akkupack mittels der Schnittstelle zur mechanischen Verbindung mit der Ladevorrichtung verbunden wird, beispielsweise in die Schnittstelle des zweiten Gehäuseteils eingeschoben wird.

In wenigstens einer bevorzugten Ausführungsform ist das erste Gehäuseteil als Gerätedose ausgestaltet.

Als Gerätedose, auch als Schalterdose oder Geräteverbindungsdose bezeichnet, wird in der Gebäudeelektroinstallation eine in der Gebäudewand installierte Anschlusseinheit bezeichnet, die dazu geeignet ist, elektrische oder elektronische Betriebsmittel, wie Schalter oder Steckdosen, aufzunehmen. In der Norm DIN-49073: 2007-09 werden Gerätedosen zum versenkten Einbau zur Aufnahme von Installationsgeräten und Steckdosen spezifiziert. Das erste Gehäuseteil ist beispielsweise als eine Gerätedose entsprechend dieser Norm ausgestaltet.

Insbesondere kann eine maximale Abmessung des Hohlraums kleiner als 150 mm sein. Eine Grundform des Hohlraums kann in verschiedenen Ausführungsformen, insbesondere wenn das erste Gehäuseteil als Gerätedose ausgestaltet ist, näherungsweise der Form eines Kreiszylinders entsprechen, dessen Höhe kleiner ist als 100 mm und/oder dessen Grundfläche einen Radius von weniger als 40 mm aufweist.

Ein Standarddurchmesser für Gerätedosen beträgt beispielsweise 68 mm. Der Durchmesser kann jedoch auch größer sein, beispielsweise bis zu 80 mm oder kleiner, beispielsweise bis zu 30 mm.

Gemäß zumindest einer Ausführungsform ist das erste Gehäuseteil als Unterputzdose oder Hohlwanddose ausgestaltet.

Ausführungsformen, bei denen das erste Gehäuseteil als Gerätedose, insbesondere als Hohlwanddose oder Unterputzdose, ausgestaltet ist, sind besonders vorteilhaft hinsichtlich der Platzersparnis, da ansonsten ungenutzter Raum im Inneren der Wand für die Ladevorrichtung genutzt wird. Ferner kann hierbei mit Vorteil auf jede sichtbare Verkabelung verzichtet werden, da die Netzspannung über eine entsprechende Leitung im Inneren der Wand durch das erste Gehäuseteil dem Gleichrichterschaltkreis zugeführt werden kann, ohne dass eine Leitung außerhalb oder an der Gebäudewand erforderlich ist.,

In alternativen Ausführungsformen ist das erste Gehäuseteil als Aufputzdose ausgebildet.

Eine Aufputzdose ist insbesondere zur Aufnahme von Steckdosen oder sonstigen elektronischen oder elektrischen Geräten ausgebildet und dazu ausgestaltet, auf der Gebäudewand installiert zu werden. Sie weist also entsprechende Befestigungsmittel zur Befestigung an der Oberfläche der Gebäudewand auf.

Solche Ausführungsformen sind vorteilhaft, da sie eine besonders einfache Nachrüstbarkeit der Ladevorrichtung in bestehenden Gebäudeinstallationen ermöglichen.

Beispielsweise kann das zweite Gehäuseteil lösbar mit dem ersten Gehäuseteil verbunden werden, etwa über eine Schraub- oder Rastverbindung. Dadurch wird auch eine besonders einfache Zugänglichkeit des Elektronikmoduls in der Aufputzdose realisiert.

Gemäß zumindest einer Ausführungsform weist das Elektronikmodul den Steuerschaltkreis auf, der mit dem Gleichrichterschaltkreis verbunden ist, um die Gleichspannung zu erhalten und der dazu eingerichtet ist, basierend auf der Gleichspannung die Ladespannung zu erzeugen beziehungsweise an der Kontaktanordnung bereitzustellen. Der Steuerschaltkreis ist zur Bereitstellung der Ladespannung mit der Kontaktanordnung verbunden.

Der Steuerschaltkreis kann beispielsweise einen Mikrocontroller oder dergleichen beinhalten, um aus der Gleichspannung die Ladespannung zu erzeugen beziehungsweise die Gleichspannung als Ladespannung gesteuert oder geregelt an der Kontaktanordnung zur Verfügung zu stellen.

Der Steuerschaltkreis kann dabei an sich bekannte Verfahren zur Ladesteuerung, beispielsweise CC-CV-Verfahren oder dergleichen, einsetzen.

Je nach Ausgestaltungsform des Akkupacks kann auch ein Batteriemanagementsystem des Akkupacks Teile der Ladesteuerung übernehmen. Insbesondere ist der Steuerschaltkreis dazu eingerichtet, mit einem Batteriemanagementsystem des Akkupacks über die Kontaktanordnung zu kommunizieren, beispielsweise um das Akkupack zu identifizieren, einen aktuellen Ladezustand des Akkupacks zu bestimmen oder eine Temperatur des Akkupacks und so weiter.

Gemäß zumindest einer Ausführungsform ist der Steuerschaltkreis dazu eingerichtet, eine Ausgangsspannung des Akkupacks zu bestimmen, insbesondere wenn das Akkupack mit der Ladevorrichtung über die elektrische Kontaktanordnung verbunden ist, und einen Ladevorgang zum Laden des Akkupacks einzuleiten, wenn die Ausgangsspannung einen vorgegebenen Schwellwert unterschreitet.

Mit anderen Worten stellt der Steuerschaltkreis die Ladespannung beispielsweise nur dann an der Kontaktanordnung bereit, wenn die Ausgangsspannung kleiner ist als der Schwellwert. In anderen Ausführungsformen kann der Steuerschaltkreis die Ladespannung an der Kontaktanordnung nur dann bereitstellen, wenn die Ausgangsspannung kleiner oder gleich dem Schwellwert ist.

Beispielsweise kann der Steuerschaltkreis dazu eingerichtet sein, das Akkupack bis zu einem vorgesehenen Maximalladezustand, also bis zu einer vorgesehenen maximalen Ausgangsspannung des Akkupacks, zu laden. Die maximale Ausgangsspannung liegt dabei oberhalb des Schwellwerts. Sinkt nun die Ausgangsspannung, beispielsweise aufgrund einer natürlichen Entladung des Akkupacks, unter den Schwellwert, so kann der Steuerschaltkreis die Ladespannung selbstständig automatisch bereitstellen, um das Akkupack wieder bis zur Maximalausgangsspannung zu laden. Auf diese Weise wird erreicht, dass das Akkupack stets mit der Ladevorrichtung verbunden bleiben kann, wenn es nicht benutzt wird, um das Elektrogerät zu betreiben und stets ein möglichst vollgeladenes Akkupack zur Verfügung steht.

Gemäß zumindest einer Ausführungsform weist das erste Gehäuseteil eine Einbauöffnung auf, durch welche das Elektronikmodul in den Hohlraum einbringbar ist oder aus dem Hohlraum entnehmbar ist.

Die Einbauöffnung ist insbesondere dem zweiten Gehäuseteil zugewandt, wenn die Ladevorrichtung bestimmungsgemäß installiert ist. Mit anderen Worten ist die Innenseite des zweiten Gehäuseteils der Einbauöffnung zugewandt.

Gemäß zumindest einer Ausführungsform ist die Einbauöffnung näherungsweise kreisförmig mit einem Radius von 30 mm bis 40 mm.

Gemäß zumindest einer Ausführungsform weist das erste Gehäuseteil eine Leitungseinlassöffnung auf, die dazu ausgelegt ist, die Versorgungsleitung zum Bereitstellen der Netzspannung in den Hohlraum zu führen.

Die Versorgungsleitung ist dabei im Allgemeinen nicht Teil der Ladevorrichtung. In manchen Ausführungsformen kann die Ladevorrichtung jedoch eine Verbindungsleitung oder einen sonstigen Anschluss aufweisen, die oder der durch die Leitungseinlassöffnung geführt ist und mit dem Elektronikmodul, insbesondere dem Gleichrichterschaltkreis, zum Zuführen der Netzspannung verbunden ist. Die Verbindungsleitung oder der sonstige Anschluss kann dann mit der eigentlichen Versorgungsleitung verbunden werden.

Vorzugsweise ist die Leitungseinlassöffnung derart an dem ersten Gehäuseteil angeordnet, dass sie bei bestimmungsgemäßer Installation der Ladevorrichtung an oder in der Gebäudewand der Gebäudewand zugewandt ist, insbesondere bei einer Installation an der Gebäudewand, oder in der Gebäudewand versenkt ist, insbesondere bei einer Installation der Ladevorrichtung in der Gebäudewand. Insbesondere ist die Leitungseinlassöffnung der Einbauöffnung gegenüberliegend an dem ersten Gehäuseteil angeordnet.

Gemäß zumindest einer Ausführungsform weist die Ladevorrichtung einen Einsatzrahmen auf, an dem das Elektronikmodul mechanisch befestigt ist oder befestigbar ist und wobei der Einsatzrahmen mit dem ersten Gehäuseteil mechanisch verbindbar ist oder verbunden ist.

Insbesondere weisen der Einsatzrahmen und das erste Gehäuseteil zueinander korrespondierende Befestigungselemente auf, mittels denen sie form- und/oder kraftschlüssig miteinander verbindbar sind. Beispielsweise können der Einsatzrahmen und das erste Gehäuseteil mittels der Befestigungselemente verschraubbar sein. Hierzu kann beispielsweise das erste Gehäuseteil ein Innengewinde aufweisen und der Einsatzrahmen eine Durchführung für eine Schraube. Der Einsatzrahmen und das erste Gehäuseteil können auch miteinander verrastbar sein, sodass die Befestigungselemente auf Seiten des Einsatzrahmens eine oder mehrere Rastnasen und auf Seiten des ersten Gehäuseteils eine oder mehrere Aussparungen zum Eingreifen der Rastnasen aufweist oder umgekehrt und so weiter.

Der Einsatzrahmen kann beispielsweise einem Bauteil entsprechen, wie es bei einer Unterputzsteckdose als Steckdoseneinsatz oder als Teil eines Steckdoseneinsatzes verwendet wird.

Gemäß zumindest einer Ausführungsform weist die Schnittstelle zur mechanischen Verbindung mit dem Akkupack wenigstens ein Führungselement zur Führung eines Akkupackgehäuses des Akkupacks auf.

Das Führungselement ist insbesondere als Gegenstück zu einem weiteren Führungselement des Akkupackgehäuses ausgestaltet.

Beispielsweise kann das Führungselement eine oder mehrere Schienen oder Nuten aufweisen und das weitere Führungselement einen Vorsprung oder eine Leiste, welche in die Schiene oder Nut eingeführt werden kann oder umgekehrt.

Gemäß zumindest einer Ausführungsform weist das zweite Gehäuseteil, insbesondere die Schnittstelle zur mechanischen Verbindung, wenigstens ein Rastelement auf, das dazu ausgelegt ist, mit wenigstens einem weiteren Rastelement des Akkupacks zusammenzuwirken, um eine Rastverbindung des Akkupacks mit dem zweiten Gehäuseteil herzustellen.

Dadurch ergibt sich eine erhöhte Flexibilität bei der Ausrichtung der Ladevorrichtung bezüglich der Gebäudewand, ohne dass befürchtet werden muss, dass das Akkupack aufgrund der Schwerkraft aus der Schnittstelle herausfällt.

Die Ladevorrichtung und das Akkupack können als erfindungsgemäßes System aufgefasst werden.

Gemäß zumindest einer Ausführungsform weist die Ladevorrichtung eine Buchse für eine Steckverbindung auf, die mit dem Elektronikmodul verbunden ist und an der die Ladespannung oder eine weitere Ladespannung bereitstellbar ist. Die Buchse kann beispielsweise als Buchse für eine USB-Steckverbindung ausgestaltet sein.

Die weitere Ladespannung kann insbesondere von dem Steuerschaltkreis basierend auf der Gleichspannung erzeugt oder bereitgestellt werden.

Auf diese Weise wird es ermöglicht, dass ein weiteres elektronisches Gerät über eine entsprechende Steckverbindung mit der Buchse geladen werden kann beziehungsweise dem Gerät elektrische Energie bereitgestellt werden kann.

Beispielsweise weist das zweite Gehäuseteil eine weitere Durchführung auf, in welcher die Buchse angeordnet ist.

In verschiedenen Ausführungsformen kann die Ladevorrichtung auch eine Anzeigeeinheit aufweisen, die dazu eingerichtet ist, einen Ladezustand des Akkupacks, insbesondere abhängig von der Ausgangsspannung des Akkupacks, anzuzeigen.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es sind insbesondere auch Ausführungen und Merkmalskombinationen von der Erfindung umfasst, die nicht alle Merkmale eines ursprünglich formulierten Anspruchs aufweisen. Es sind darüber hinaus Ausführungen und Merkmalskombinationen von der Erfindung umfasst, die über die in den Rückbezügen der Ansprüche dargelegten Merkmalskombinationen hinausgehen oder von diesen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen:
- Fig. 1: eine schematische Darstellung einer beispielhaften Ausführungsform einer erfindungsgemäßen Ladevorrichtung in einer Explosionsansicht;
- Fig. 2: eine schematische Darstellung einer weiteren beispielhaften Ausführungsform einer erfindungsgemäßen Ladevorrichtung in einer Vorderansicht; und
- Fig. 3: eine schematische Darstellung eines Systems aus einem Akkupack und einer weiteren beispielhaften Ausführungsform einer erfindungsgemäßen Ladevorrichtung in einer Seitenansicht.

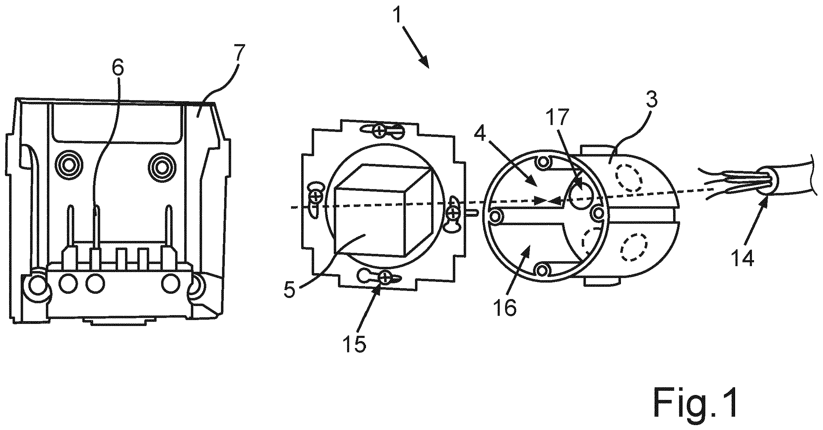

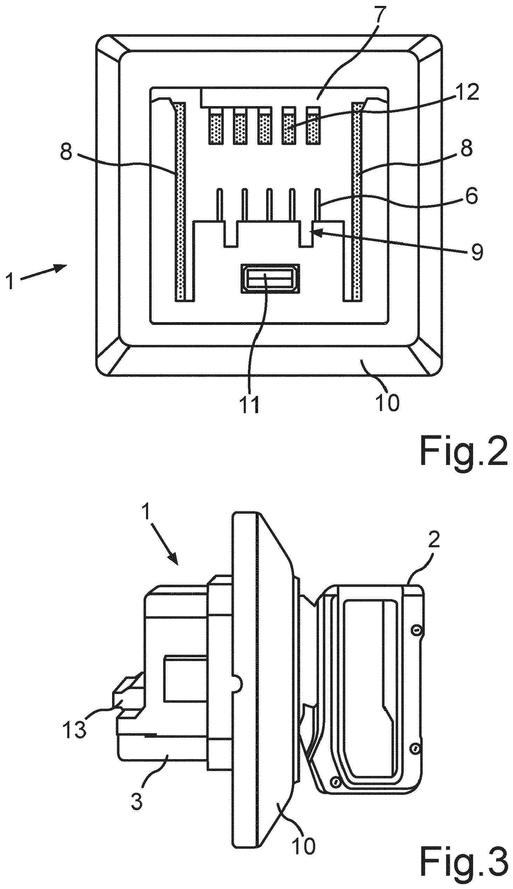

In Fig. 1 ist eine Explosionsansicht einer beispielhaften Ausführungsform einer Ladevorrichtung 1 zum Laden eines Akkupacks 2 (vergleiche Fig. 3) gemäß der Erfindung gezeigt. Die Ladevorrichtung 1 ist im Beispiel der Fig. 1 zur Installation in einer Gebäudewand ausgebildet. In alternativen Ausführungsformen ist die Ladevorrichtung 1 zur Installation an einer Gebäudewand ausgebildet.

Die Ladevorrichtung 1 weist ein erstes Gehäuseteil 3 auf, beispielsweise eine Gerätedose, insbesondere eine Unterputzdose oder Hohlraumdose, mit einem Hohlraum 4, der näherungsweise kreiszylinderförmig ausgestaltet ist. Auf einer in der Gebäudewand versenkbaren Seite weist das erste Gehäuseteil 3 eine Leitungseinlassöffnung 17 auf, durch welche eine in der Gebäudewand verlaufende Versorgungsleitung 14 zur Bereitstellung einer Netzspannung in dem Hohlraum 4 geführt werden kann.

Des Weiteren weist die Ladevorrichtung 1 ein Elektronikmodul 5 auf, das durch eine der Leitungseinlassöffnung 17 gegenüberliegende Einbauöffnung 16 des ersten Gehäuseteils 3 in den Hohlraum 4 einbringbar ist, sodass sich das Elektronikmodul 5 insbesondere vollständig innerhalb des Hohlraums 4 befindet. Optional kann die Ladevorrichtung 1 einen Einsatzrahmen 15 aufweisen, an dem das Elektronikmodul 5 einerseits befestigt werden kann und der andererseits mit dem ersten Gehäuseteil 3 verbunden werden kann, beispielsweise verschraubt werden kann.

Das Elektronikmodul 5 weist beispielsweise einen Gleichrichterschaltkreis auf, beispielsweise als Teil eines Schaltnetzteils, der mit der Versorgungsleitung 14 zum Erhalten der Netzspannung verbunden werden kann und dazu eingerichtet ist, die Netzspannung in eine Gleichspannung umzuwandeln.

Die Ladevorrichtung 1 weist außerdem ein zweites Gehäuseteil 7 auf, das als Abdeckung für die Einbauöffnung 16 dienen kann und eine Schnittstelle 8, wie sie beispielsweise in Fig. 2 dargestellt ist, zur mechanischen Verbindung der Ladevorrichtung 1 mit dem Akkupack 2 aufweist. Außerdem weist die Ladevorrichtung 1 eine Kontaktanordnung 6 mit zwei oder mehr elektrischen Kontakten auf, mit denen das Akkupack 2 elektrisch mit dem Elektronikmodul 5 verbunden werden kann. Das zweite Gehäuseteil 7 weist insbesondere eine Durchführung für die Kontaktanordnung 6 auf, sodass die Kontaktanordnung 6 in dem zweiten Gehäuseteil 7 angeordnet werden kann.

Ein Steuerschaltkreis des Elektronikmoduls 5 stellt eine Ladespannung zum Laden des Akkupacks 2 abhängig von der von dem Gleichrichterschaltkreis erzeugten Gleichspannung an der Kontaktanordnung 6 bereit.

In Fig. 2 ist eine weitere beispielhafte Ausführungsform der Ladevorrichtung 1, die insbesondere auf der in Fig. 1 dargestellten Ladevorrichtung 1 basiert, in einem montierten Zustand in einer Vorderansicht gezeigt.

In Fig. 2 ist die mechanische Schnittstelle 8 derart ausgeführt, dass sie zwei gegenüberliegende Schienen zur Aufnahme eines entsprechenden Führungselements auf Seiten des Akkupacks 2 aufweist, sodass das Akkupack 2 im gezeigten Beispiel von oben nach unten in das zweite Gehäuseteil 7 eingeschoben werden kann und, wenn es vollständig eingeschoben wurde, automatisch elektrisch mit der Kontaktanordnung 6 verbunden wird.

Optional weist das zweite Gehäuseteil 7 eine Rastvorrichtung 12 auf, die mit einer entsprechenden Rastvorrichtung auf Seiten des Akkupacks 2 wechselwirken kann, sodass eine stabile Befestigung des Akkupacks 2 gewährleistet werden kann, auch wenn die Ladevorrichtung 1 anders als in Fig. 2 gezeigt, beispielsweise um 180 Grad gedreht, installiert wird. Die Rastverbindung kann durch Betätigung eines entsprechenden Bedienelements auf Seiten des Akkupacks 2 oder auf Seiten der Ladevorrichtung 1 gelöst werden.

In Fig. 2 ist des Weiteren ein optionaler Rahmen 10, der das zweite Gehäuseteil umläuft, abgebildet.

Beispielsweise kann die Ladevorrichtung 1 eine oder mehrere Buchsen 11 zur Herstellung einer Steckverbindung, beispielsweise einer USB-Verbindung, aufweisen. So kann ein Kabel oder Gerät mit einem USB-Stecker in die Buchse 11 eingeführt werden, wobei die Buchse 11 ebenfalls die Ladespannung oder eine weitere Ladespannung zur Verfügung stellen kann, sodass Gerät geladen oder betrieben werden kann.

In Fig. 2 ist außerdem ein optionales Element 9 zur konstruktiven Codierung dargestellt. Mit der konstruktiven Codierung kann die Kompatibilität systematisch eingeschränkt werden. Dies kann zum Beispiel mit Spritzguss-Werkzeugeinsätzen realisiert werden. Die Aufnahme kann Aussparungen aufweisen. Die Gegenseite kann hingegen zum Beispiel Stege, welche in die Aussparung passen aufweisen.

Schließt man die Aussparungen mittels entsprechendem Werkzeugeinsatz, lässt sich das Akkupack nicht mehr verrasten, eine elektrische Verbindung wird unterbunden.

In Fig. 3 ist die Ladevorrichtung 1 der Fig. 2 in einer schematischen Seitendarstellung zusammen mit einem in die Schnittstelle 8 eingeführten und so mit der Ladevorrichtung 1 verbundenen Akkupack 2 dargestellt.

Beispielsweise kann ein Anschluss 13 zur Verbindung der Versorgungsleitung 14 auch außerhalb des Hohlraums 4 vorgesehen sein, der wiederum mit dem Gleichrichterschaltkreis verbunden ist.

In verschiedenen Ausführungsformen der Erfindung weist die Ladevorrichtung eine Gerätedose auf, die für handelsübliche Steckdosen der elektrischen Hausinstallation geeignet sein können. Das Elektronikmodul, insbesondere der Steuerungsschaltkreis gibt kann das Ladeverfahren, beispielsweise entsprechend einem CC-CV-Verfahren und/oder temperaturabhängigen Laden realisieren. Über eine durch das zweite Gehäuseteil gebildete Ladeschnittstelle kann ein Benutzer das Akkupack in der Ladevorrichtung platzieren um dieses zu Laden und gegebenenfalls dauerhaft aufzubewahren.

Beispielsweise kann auch ein Verfahren implementiert werden, das feststellt ob mindestens eine Akkumulatorzelle des Akkupacks teiltiefenentladen ist, das heißt dass die Ausgangspannung der entsprechenden Akkumulatorzelle kleiner als eine vorgegebene Entladeschlussspannung, beispielsweise 2,5 V, ist. Sollte die Ausgangspannung noch nicht unter einen noch geringeren kritischen Wert gefallen sein, zum Beispiel 1,5 V, so kann, gegebenenfalls unter Berücksichtigung der Temperatur, mittels eines reduziertem Ladestroms geladen werden.

Beispielsweise kann der Steuerungsschaltkreis das Akkupack mit einem geringen Ladestrom laden, um einerseits das Akkupack zu schonen und andererseits die Leistung des Netzteils gering zu halten, damit in der Ladevorrichtung kein Wärmestau oder zu hohe Temperaturen entstehen.

Sollte das Akkupack durch natürliche Selbstentladung einen bestimmten Spannungswert unterschreiten, kann der Ladevorgang erneut gestartet werden. Das Akkupack ist somit stets aufgeladen und steht dem Benutzer dann für eine Vielzahl an Anwendungen zur Verfügung. Außerdem wird eine Aufbewahrungsmöglichkeit für das Akkupack realisiert.

In verschiedenen Ausführungsformen weist die Ladevorrichtung zusätzlich eine Anzeige für den Ladezustand und/oder einen Ladeprozess, beispielsweise betreffend eine aktuelle Ladegeschwindigkeit oder Ladephase, eine Restladezeit und so weiter, auf. In verschiedenen Ausführungsformen weist die Ladevorrichtung zusätzlich eine USB-Ladebuchse auf.

### BEZUGSZEICHENLISTE:

- 1: Ladevorrichtung
- 2: Akkupack
- 3: Gehäuseteil
- 4: Hohlraum
- 5: Elektronikmodul
- 6: Kontaktanordnung
- 7: Gehäuseteil
- 8: Schnittstelle
- 9: Kodierung
- 10: Rahmen
- 11: Buchse
- 12: Rastvorrichtung
- 13: Anschluss
- 14: Versorgungsleitung
- 15: Einsatzrahmen
- 16: Einbauöffnung
- 17: Leitungseinlassöffnung

## Patentansprüche

1. Ladevorrichtung (1) für ein Akkupack (2) zur Installation an oder in einer Gebäudewand, die Ladevorrichtung (1) aufweisend
- ein erstes Gehäuseteil (3), das zur Installation an oder in der Gebäudewand ausgebildet ist und einen Hohlraum (4) bildet, der von dem ersten Gehäuseteil (3) teilweise umschlossen ist;
- ein Elektronikmodul (5), das in dem Hohlraum (4) anordenbar oder angeordnet ist und einen Gleichrichterschaltkreis aufweist, der dazu eingerichtet ist, eine Netzspannung in eine Gleichspannung umzuwandeln;
- eine Kontaktanordnung (6) zur elektrischen Verbindung des Elektronikmoduls (5) mit dem Akkupack (2), wobei das Elektronikmodul dazu eingerichtet ist, eine von der Gleichspannung abhängige Ladespannung zum Laden des Akkupacks (2) an der Kontaktanordnung (6) bereitzustellen; und
- ein zweites Gehäuseteil (7), das eine Schnittstelle (8) zur mechanischen Verbindung mit dem Akkupack (2) sowie wenigstens eine Durchführung für die Kontaktanordnung (6) aufweist.

2. Ladevorrichtung (1) nach Anspruch 1, wobei das erste Gehäuseteil (3) als Gerätedose ausgestaltet ist.

3. Ladevorrichtung (1) nach einem der vorhergehenden Ansprüche, wobei das erste Gehäuseteil (3) als Unterputzdose oder als Hohlwanddose ausgebildet ist.

4. Ladevorrichtung (1) nach Anspruch 1, wobei das erste Gehäuseteil (3) als Aufputzdose ausgebildet ist.

5. Ladevorrichtung (1) nach einem der vorhergehenden Ansprüche, wobei das Elektronikmodul (5) einen Steuerschaltkreis aufweist, der
- mit dem Gleichrichterschaltkreis zum Erhalten der Gleichspannung verbunden ist;
- dazu eingerichtet ist, basierend auf der Gleichspannung die Ladespannung zu erzeugen; und
- mit der Kontaktanordnung (6) zur Bereitstellung der Ladespannung verbunden ist.

6. Ladevorrichtung (1) nach einem der Ansprüche 4 oder 5, wobei der Steuerschaltkreis dazu eingerichtet ist, eine Ausgangsspannung des Akkupacks (2) zu bestimmen und einen Ladevorgang zum Laden des Akkupacks (2) einzuleiten, wenn die Ausgangsspannung einen vorgegebenen Schwellwert unterschreitet.

7. Ladevorrichtung (1) nach vorhergehenden Ansprüche, wobei das Elektronikmodul (5) ein Schaltnetzteil aufweist, welches den Gleichrichterschaltkreis enthält.

8. Ladevorrichtung (1) nach vorhergehenden Ansprüche, wobei das erste Gehäuseteil (3) eine Einbauöffnung (16) aufweist, durch welche das Elektronikmodul (5) in den Hohlraum (4) einbringbar oder aus dem Hohlraum (4) entnehmbar ist.

9. Ladevorrichtung (1) nach vorhergehenden Ansprüche, wobei das erste Gehäuseteil (3) eine Leitungseinlassöffnung (17) aufweist, die dazu ausgelegt ist, eine Versorgungsleitung (14) zum Bereitstellen der Netzspannung in den Hohlraum (4) zu führen.

10. Ladevorrichtung (1) nach einem der vorhergehenden Ansprüche, wobei die Ladevorrichtung (1) einen Einsatzrahmen (15) aufweist, an dem das Elektronikmodul (5) mechanisch befestigt ist und der mit dem ersten Gehäuseteil (3) mechanisch verbindbar ist.

11. Ladevorrichtung (1) nach einem der vorhergehenden Ansprüche, wobei die Schnittstelle (8) zur mechanischen Verbindung mit dem Akkupack (2) wenigstens ein Führungselement zur Führung eines Akkupackgehäuses des Akkupacks (2) aufweist.

12. Ladevorrichtung (1) nach einem der vorhergehenden Ansprüche, wobei das zweite Gehäuseteil (7) wenigstens ein Rastelement (12) aufweist, das dazu ausgelegt ist, mit wenigstens einem weiteren Rastelement des Akkupacks (2) zusammenzuwirken, um eine Rastverbindung des Akkupacks (2) mit dem zweiten Gehäuseteil (7) herzustellen.

13. Ladevorrichtung (1) nach einem der vorhergehenden Ansprüche, wobei die Ladevorrichtung (1) eine Buchse (11) für eine Steckverbindung aufweist, die mit dem Elektronikmodul (5) verbunden ist und an der die Ladespannung oder eine weitere Ladespannung bereitstellbar ist.

14. Ladevorrichtung (1) nach Anspruch 13, wobei das zweite Gehäuseteil (7) eine weitere Durchführung aufweist, in welcher die Buchse (11) angeordnet ist.
